# EUROPEAN PATENT APPLICATION

(11) **EP 2 672 362 A1**
(43) Date of publication of application: **11.12.2013**
(21) Application number: 11857500.0
(22) Date of filing: 31.01.2011
(51) Int. Cl.: G06F 1/26, G06F 1/32, H02J 1/00, H02J 7/00

(54) **POWER SUPPLY DEVICE, ELECTRONIC APPARATUS, AND ELECTRONIC APPARATUS SYSTEM**

(71) Applicant: Fujitsu Limited, Kawasaki-shi, Kanagawa 211-8588 (JP)
(72) Inventor: YAMADA, Tomokazu, Kawasaki-shi Kanagawa 211-8588 (JP)
(74) Representative: Keltsch, Ulrike
(86) International application number: PCT/JP2011/051967
(87) International publication number: WO 2012/104980

(57) **Abstract**

A power supply device connected to an electronic device for supplying power to the electronic device, including a control unit configured to control supply of power to the electronic device and a switching circuit configured to receive, from the electronic device, a status signal indicating power status of the electronic device or operating status of the electronic device, and to start and stop supply of a power supply voltage to the control unit based on the status signal.

## Description

### Technical Field

The present invention relates to a power supply device which supplies power to an electronic device, an electronic device which is connected to the power supply device, and an electronic device system including the power supply device and the electronic device.

### Background Art

Information processing apparatuses such as personal computers (PCs) now use alternating current (AC) adapters for supplying power.

A microscopic current flows in an AC adapter connected to a PC even when the PC is in a hibernation or is power-off For this reason, a power supply voltage VCC is applied to a power factor correction (PFC) control circuit and a pulse width modulation (PWM) main control circuit as primary-side circuits inside the AC adapter, and a constant drive current flows into the circuits, which causes repeated oscillation.

Accordingly, the AC adapter consumes power even when the PC is power-off

### Patent Document 1

Japanese Patent Laid-Open No. 06-292363

### Disclosure of the Invention

### Problem to be Solved by the Invention

It is an object of the present invention to reduce the power consumption of a power supply device.

### Means for Solving the Problem

A power supply device according to an embodiment is a power supply device connected to an electronic device for supplying power to the electronic device, including: a control unit configured to control supply of power to the electronic device; and a switching circuit configured to receive, from the electronic device, a status signal indicating power status of the electronic device or operating status of the electronic device, and to start and stop supply of a power supply voltage to the control unit using the status signal.

An electronic device according to the embodiment is an electronic device connected to a power supply device, including: a battery configured to supply power to the electronic device; and a status detecting unit configured to be operated by power supplied from the power supply device or the battery, to detect power status of the electronic device or operating status of the electronic device, and to output a status signal indicating the power status of the electronic device or the operating status of the electronic device to the power supply device.

An electronic device system according to the embodiment includes the power supply device and the electronic device.

### Advantage of the Invention

The power supply device of the embodiment allows a reduction in the power consumption of a power supply device.

### Brief Description of the Drawings

Figure 1 is a diagram of the configuration of an electronic device system according to a first embodiment;
Figure 2 is a diagram of the configuration of an electronic device system according to a second embodiment;
Figure 3 is a diagram of the configuration of a PC according to the first embodiment;
Figures 4 are charts indicating signals when the PC is turned from ON to OFF;
Figures 5 are charts indicating the signals when the PC is turned from OFF to ON; and
Figure 6 is a view of the appearance of an AC adapter according to the first embodiment.

### Embodiments for Carrying Out the Invention

Embodiments will be described below with reference to the drawings.

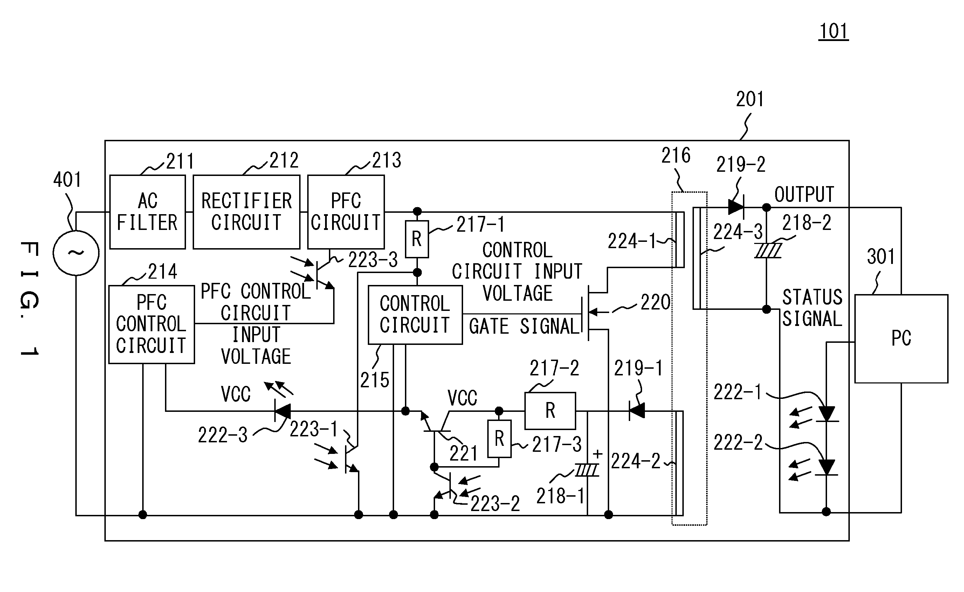

Figure 1 is a diagram of the configuration of an electronic device system according to the first embodiment.

An electronic device system 101 includes an AC adapter 201 and a PC 301.
The AC adapter 201 is connected to an AC power supply 401. The AC adapter 201 converts an alternating current to a direct current and supplies power to the PC 301. Note that the PC 301 is an example of an electronic device powered by the AC adapter 201. An electronic device to be connected to the AC adapter 201 is not limited to a PC and may be selected from among video devices, acoustic devices, and other various types of devices.

The PC 301 is an electronic device which performs various types of processing.
The PC 301 includes a battery and is operated by power supplied from the AC adapter 201 or the battery. For example, when power is supplied from the AC adapter 201, the PC 301 is operated by power from the AC adapter 201. When power from the AC adapter 201 is stopped, the PC 301 is operated by power supplied from the battery.

The PC 301 outputs a status signal indicating the status (power status or operating status) of the PC 301 to the AC adapter 201. More specifically, the PC 301 outputs a high-level signal to the AC adapter 201 when the PC 301 is power-off or in a hibernation. The PC 301 outputs a low-level signal or an open signal to the AC adapter 201 when the PC 301 is power-on. Note that the term hibernation refers to a state in which the PC 301 is turned off after information in memory is written to a hard disk. The hibernation corresponds to S4 in the Advanced Configuration and Power Interface (ACPI).
Note that the detailed configuration of the PC 301 will be described later.

The details of the AC adapter 201 will be described below.
The AC adapter 201 includes an AC filter 211, a rectifier circuit 212, a PFC circuit 213, a PFC control circuit 214, a control circuit 215, a transformer 216, resistors 217-i (i = 1 to 3), capacitors 218-j (j = 1 to 2), diodes 219-j, a metal oxide semiconductor field effect transistor (MOSFET) 220, a transistor 221, photocoupler light-emitting diodes 222-i, and photocoupler light-receiving transistors 223-i.

The transformer 216 includes coils 224-i.
Each photocoupler light-emitting diode 222-i and the corresponding photocoupler light-receiving transistor 223-i constitute one photocoupler. Note that a photo-MOS may be used instead of a photocoupler. In this case, each photocoupler light-emitting diode 222-i serves as the light-emitting side of a photo-MOS while each photocoupler light-receiving transistor 223-i serves as the light-receiving side of a photo-MOS.

The AC filter 211, rectifiercircuit212, PFC circuit 213, PFC control circuit 214, control circuit 215, transformer 216, resistors 217-i (i = 1 to 3), capacitor 218-1, diode 219-1, MOSFET 220, transistor 221, photocoupler light-emitting diode 222-3, and photocoupler light-receiving transistors 223-i, all of which are connected to the AC power supply 401, are primary-side circuits.

The capacitor 218-2, diode 219-2, and photocoupler light-emitting diodes 222-1 and 222-2, all of which are connected to the PC 301, are secondary-side circuits.

The AC filter 211 removes noise in input voltage or current and removes noise in voltage or current to be outputted from the AC adapter to the outside.

The rectifier circuit 212 converts an alternating current to a direct current.
The PFC circuit 213 changes the waveform of current for improvement of a power-factor. The PFC circuit 213 outputs an input voltage from the rectifier circuit 212 as a PFC control circuit input voltage to the PFC control circuit 214 via the photocoupler light-receiving transistor 223-3.

The PFC control circuit 214 controls the PFC circuit 213. The PFC control circuit 214 controls the PFC circuit 213 using the PFC control circuit input voltage.

The control circuit 215 is connected to a gate of the MOSFET 220 and controls the MOSFET 220 by outputting a gate signal. The control circuit 215 receives a control circuit input voltage input from the PFC circuit 213 via the resistor 217-1. The control circuit 215 controls the MOSFET 220 using the control circuit input voltage. The control circuit 215 is, for example, a PWM control circuit which performs PWM control.

A power supply voltage VCC for driving the PFC control circuit 214 and control circuit 215 is applied to the PFC control circuit 214 and control circuit 215.

The transformer 216 converts voltages.
The MOSFET 220 is an N-channel MOSFET. The MOSFET 220 has a drain connected to the coil 224-1, a source connected to the coil 224-2, and the gate connected to the control circuit 215.

The photocoupler light-emitting diode 222-1 is connected to the PC 301 via a status signal terminal. When current flows into the photocoupler light-emitting diode 222-1, the photocoupler light-receiving transistor 223-1 is turned on.

The photocoupler light-emitting diode 222-2 is connected to the photocoupler light-emitting diode 222-1. When current flows into the photocoupler light-emitting diode 222-2, the photocoupler light-receiving transistor 223-2 is turned on.

The photocoupler light-emitting diode 222-3 is arranged between an emitter of the transistor 221 and the PFC control circuit 214. When current flows into the photocoupler light-emitting diode 222-3, the photocoupler light-receiving transistor 223-3 is turned on.

The operation of the AC adapter 201 according to the first embodiment will be described below.
When the PC 301 is power-on, the status signal terminal receives the low-level or open status signal from the PC 301. Since the status signal is at low level or open, current does not flow into the photocoupler light-emitting diodes 222-1 and 222-2, and the photocoupler light-receiving transistors 223-1 and 223-2 are OFF. Supply of current to the photocoupler light-receiving transistors 223-1 and 223-2 is cut off.

The power supply voltage VCC and the control circuit input voltage are applied to the control circuit 215. The control circuit 215 is thus operable.

The power supply voltage VCC is applied to the PFC control circuit 214, and current flows through the photocoupler light-emitting diode 222-3. Accordingly, the photocoupler light-receiving transistor 223-3 is ON, the PFC circuit 213 and PFC control circuit 214 are electrically continuous, and the PFC control circuit input voltage is input to the PFC control circuit 214.

As described above, while the AC adapter is ON, the PFC control circuit 214 and control circuit 215 operate to supply power to the PC 301 connected to the secondary-side circuits.

When the PC 301 is power-off or in the hibernation, and the high-level status signal (e.g., 5 V) is input from the PC 301 to the status signal terminal, current flows into the photocoupler light-emitting diodes 222-1 and 222-2. This turns on the photocoupler light-receiving transistors 223-1 and 223-2, i.e., brings the photocoupler light-receiving transistors 223-1 and 223-2 into conduction and reduces the power supply voltage VCC. The control circuit input voltage to the control circuit 215 is also reduced.

The reduction in power supply voltage VCC causes a reduction in current supplied to the photocoupler light-emitting diode 222-3. The photocoupler light-receiving transistor 223-3 is brought out of conduction, and the PFC control circuit input voltage to the PFC control circuit 214 is cut off.

As described above, while the AC adapter 201 is OFF, the PFC control circuit 214 and control circuit 215 are stopped, and supply of power to the PC 301 is interrupted.

An electronic device system according to a second embodiment will be described.
Note that components denoted by the same reference numerals in the drawings are the same components or components having similar advantages and that a description thereof may be omitted in the explanation below.

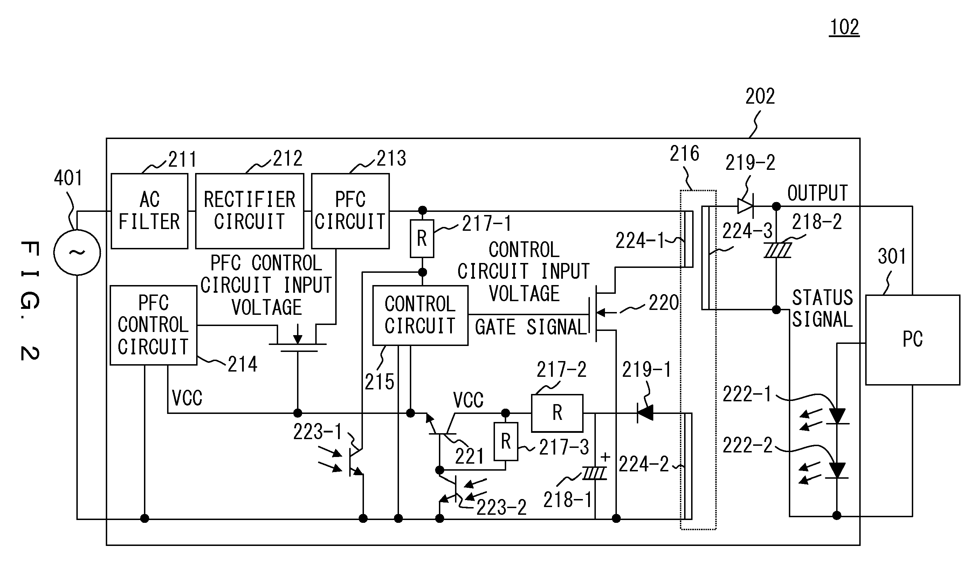

Figure 2 is a diagram of the configuration of a processing system according to the second embodiment.

An electronic device system 102 includes an AC adapter 202 and a PC 301.
The AC adapter 202 includes an AC filter 211, a rectifier circuit 212, a PFC circuit 213, a PFC control circuit 214, a control circuit 215, a transformer 216, resistors 217-i (i = 1 to 3), capacitors 218-j (j = 1 to 2), diodes 219-j, a metal oxide semiconductor field effect transistor (MOSFET) 220, a transistor 221, photocoupler light-emitting diodes 222-j, photocoupler light-receiving transistors 223-j, and a MOSFET 224. (A photo-MOS may be used instead of a photocoupler. In this case, each photocoupler light-emitting diode serves as the light-emitting side of a photo-MOS while each photocoupler light-receiving transistor serves as the light-receiving side of a photo-MOS.)

The AC adapter 202 according to the second embodiment is different from the AC adapter 201 according to the first embodiment in that the AC adapter 202 includes the MOSFET 204 instead of the photocoupler light-emitting diode 222-3 and photocoupler light-receiving transistor 223-3.

The MOSFET 224 is an N-channel MOSFET. The MOSFET 224 has a source connected to the PFC control circuit 214, a drain connected to the PFC circuit 213, and a gate connected between the PFC control circuit 214 and an emitter of the transistor 221. A voltage VCC is applied as a gate voltage to the gate.

The operation of the AC adapter 202 according to the second embodiment will be described below.
When the PC 301 is power-on, a status signal terminal receives a low-level or open status signal from the PC 301. Since the status signal is at low level, current does not flow into the photocoupler light-emitting diodes 222-1 and 222-2, and the photocoupler light-receiving transistors 223-1 and 223-2 are OFF. Supply of current to the photocoupler light-receiving transistors 223-1 and 223-2 is cut off.

The power supply voltage VCC and a control circuit input voltage are applied to the control circuit 215. The control circuit 215 is thus operable.

The power supply voltage VCC is applied to the PFC control circuit 214 and is also applied to the gate of the MOSFET 224. Accordingly, the MOSFET 224 is ON, the PFC circuit 213 and PFC control circuit 214 are electrically continuous, and a PFC control circuit input voltage is input to the PFC control circuit 214.

As described above, while the AC adapter 202 is ON, the PFC control circuit 214 and control circuit 215 operate to supply power to the PC 301 connected to secondary-side circuits.

When the PC 301 is power-off or in a hibernation, and the high-level status signal (e.g., 5 V) is input from the PC 301 to the status signal terminal, current flows into the photocoupler light-emitting diodes 222-1 and 222-2. This turns on the photocoupler light-receiving transistors 223-1 and 223-2, i.e., brings the photocoupler light-receiving transistors 223-1 and 223-2 into conduction and reduces the power supply voltage VCC. The control circuit input voltage to the control circuit 215 is also reduced.

The reduction in power supply voltage VCC causes a reduction in the gate voltage of the MOSFET 224. The MOSFET 224 is brought out of conduction, and the PFC control circuit input voltage to the PFC control circuit 214 is cut off.

As described above, while the AC adapter 202 is OFF, the PFC control circuit 214 and control circuit 215 are stopped, and supply of power to the PC 301 is interrupted.

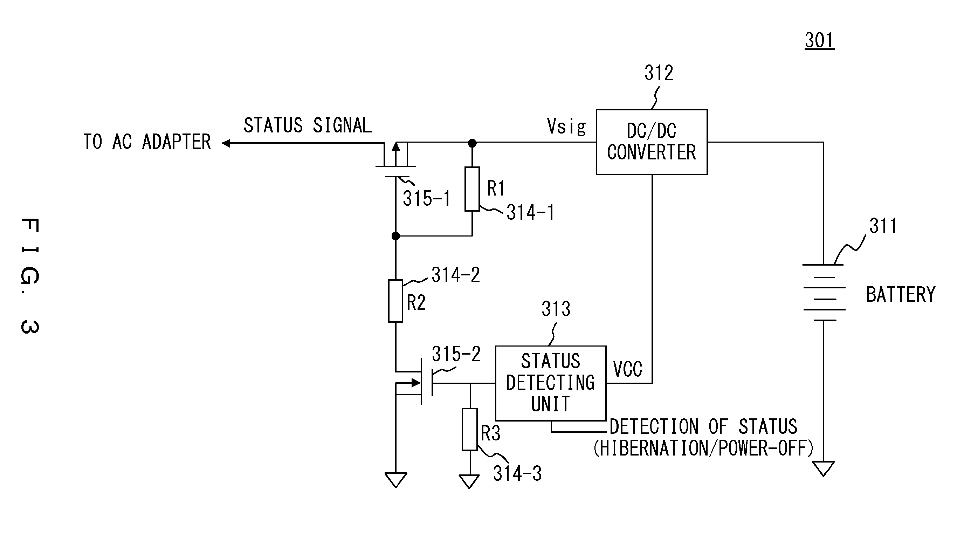

Figure 3 is a diagram of the configuration of the PC according to the first embodiment.
Note that Figure 3 shows components related to the output of the status signal indicating the status of the PC 301 and that components such as a central processing unit (CPU), memory, and a hard disk drive are not shown.

The configuration of the PC 301 according to the first embodiment and the configuration of the PC 301 according to the second embodiment are the same.

The PC 301 includes a battery 311, a DC/DC converter 312, a status detecting unit 313, resistors 314-i, and MOSFETs 315-1 and 315-2.

The battery 311 is a secondary battery which is repeatedly rechargeable and dischargeable and is, for example, a lithium ion battery. The battery 311 supplies power to the DC/DC converter 312.

The DC/DC converter 312 converts DC voltages. The DC/DC converter 312 outputs a high-level signal Vsig to the MOSFET 315-1 and a power supply voltage VCC to the status detecting unit 313.

The status detecting unit 313 detects the status of the PC 301 and, if the PC 301 is power-off or in the hibernation, outputs a high-level signal to a gate of the MOSFET 315-2. The status detecting unit 313 is operated by power supplied from the AC adapter 201 or battery 311. When the PC 301 is power-off or in the hibernation, the status detecting unit 313 is operated by power (the power supply voltage VCC) supplied from the battery 311.

The MOSFET 315-1 is a P-channel MOSFET. The MOSFET 315-1 has a source connected to the DC/DC converter 312, a drain connected to the status signal terminal of the AC adapter 201, and a gate connected to a drain of the MOSFET 315-2 via the resistor 314-2.

The MOSFET 315-2 is an N-channel MOSFET. The MOSFET 315-2 has a source connected to ground, the drain connected to the gate of the MOSFET 315-1 via the resistor 314-2, and the gate connected to the status detecting unit 313.

The operation of the PC 301 will be described. If a result of detecting the status of the PC 301 shows that the PC 301 is power-off or in the hibernation, the status detecting unit 313 outputs a high-level signal to the gate of the MOSFET 315-2.

The high-level signal turns on the MOSFET 315-2 and also turns on the MOSFET 315-1. The MOSFET 315-1 sends out the high-level status signal to the AC adapter.

If the result of detecting the status of the PC 301 shows that the PC 301 is power-on, the status detecting unit 313 outputs a low-level signal to the gate of the MOSFET 315-2.

The low-level signal turns off the MOSFET 315-2 and also turns off the MOSFET 315-1. The MOSFET 315-1 sends out the low-level or open status signal to the AC adapter.

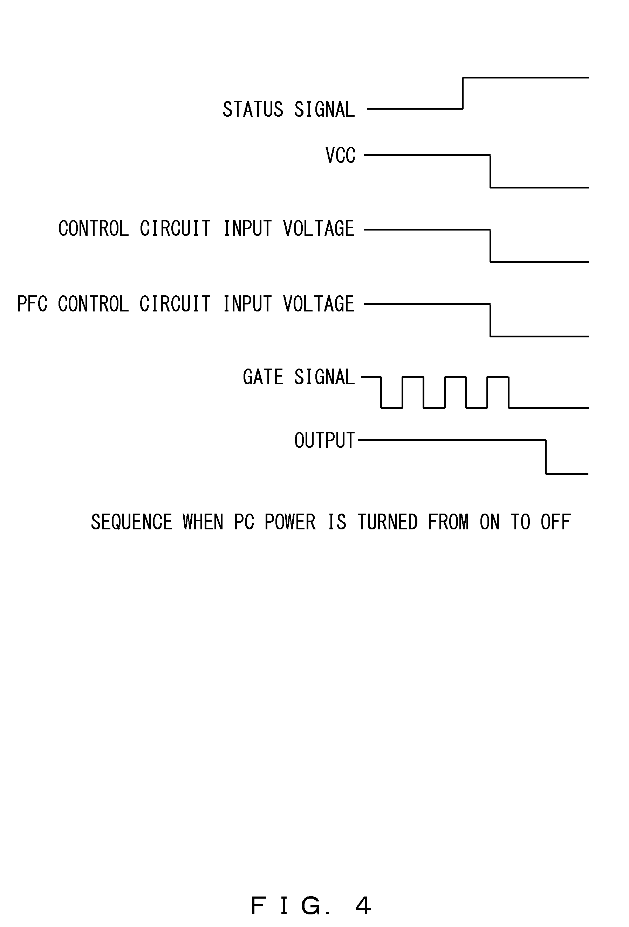

Figures 4 are charts indicating signals when the PC is turned from ON to OFF.
Figures 4 show the statuses of the status signal, VCC, the control circuit input voltage, the PFC control circuit input voltage, the gate signal, and the output from the AC adapter.

When the PC is turned from ON to OFF, the status signal changes to high level, and the power supply voltage VCC to the control circuit changes to low level. The control circuit input voltage and PFC control circuit input voltage change to low level, the gate signal is set to low level, and the output changes to low level.

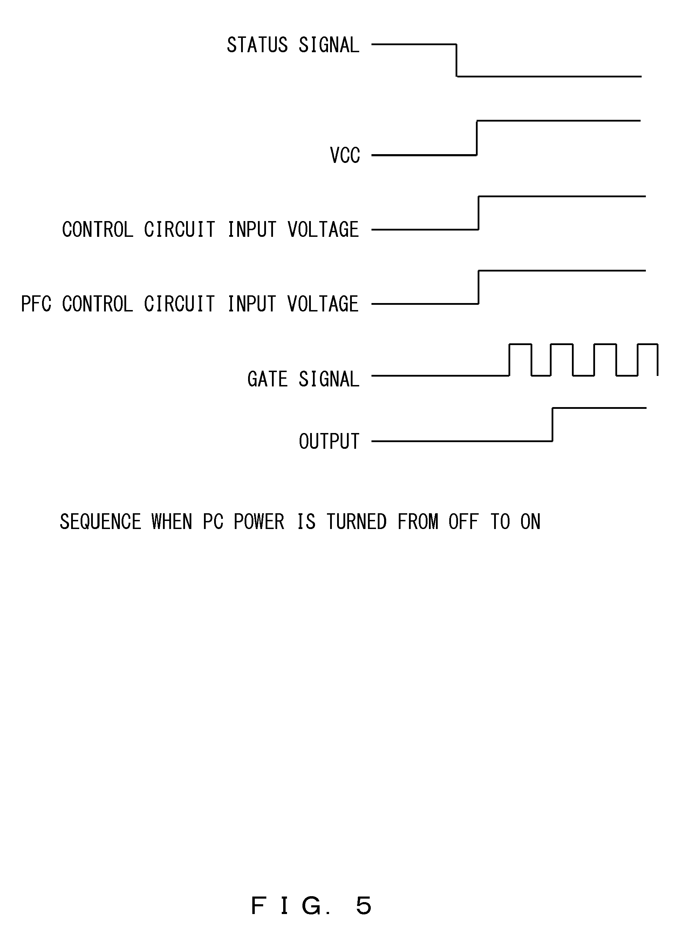

Figures 5 are charts indicating the signals when the PC is turned from OFF to ON.
Figures 5 show the statuses of the status signal, VCC, the control circuit input voltage, the PFC control circuit input voltage, the gate signal, and the output from the AC adapter.

When the PC is turned from OFF to ON, the status signal changes to low level or becomes open, and the power supply voltage VCC to the control circuit changes to high level. The control circuit input voltage and PFC control circuit input voltage change to high level, the gate signal starts oscillating, and the output changes to high level.

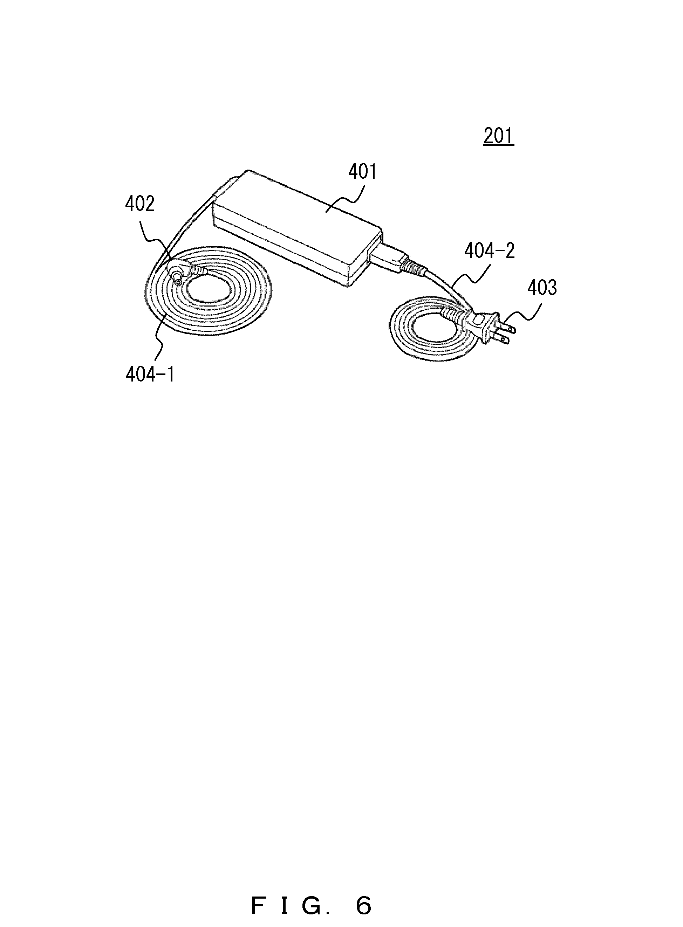

Figure 6 is a view of the appearance of the AC adapter according to the first embodiment.
The AC adapter 201 includes a AC power supply 401 which converts an alternating current to a direct current, a terminal 402 which is used to be connected to the PC 301, and a plug 403 which is used to be connected to the AC power supply 401. The AC power supply 401 and terminal 402 and the AC power supply 401 and plug 403 are connected via cables 404-1 and 404-2, respectively.

The AC power supply 401 converts an alternating current which is input via the plug 403 to a direct current suitable for the PC 301 and supplies power to the PC 301 via the terminal 402.

The terminal 402 is used to supply current from the AC power supply 401 to the PC 301 and send the status signal from the PC to the AC power supply.

The plug 403 is inserted in an outlet for the AC power supply 401, which causes an alternating current to be supplied to the AC power supply 401.

Note that the AC adapter 202 according to the second embodiment includes a AC power supply 401 which converts an alternating current to a direct current, a terminal 402 which is used to be connected to the PC 301, and a plug 403 which is used to be connected to an AC power supply 401, like the AC adapter 201 according to the first embodiment.

According to the AC adapters of the embodiments, when a PC is power-off or in a hibernation, power consumption can be reduced by stopping supply of a power supply voltage to the control circuit.

Furthermore, according to the AC adapters of the embodiments, when the PC is power-off or in the hibernation, power consumption can be reduced by stopping supply of the power supply voltage to the PFC control circuit.

Furthermore, according to the AC adapters of the embodiments, when the PC is power-ff or in the hibernation, power consumption can be reduced by stopping supply of input voltages and VCC to the control circuit and PFC control circuit.

## Claims

1. A power supply device connected to an electronic device for supplying power to the electronic device, comprising:
a control unit configured to control supply of power to the electronic device; and
a switching circuit configured to receive, from the electronic device, a status signal indicating power status of the electronic device or operating status of the electronic device, and to start and stop supply of a power supply voltage to the control unit based on the status signal.

2. The power supply device according to claim 1, wherein the switching circuit sets an input voltage to the control unit used to control supply of power to the electronic device to low level based on the status signal.

3. The power supply device according to claim 1 or 2, wherein the switching circuit stops supply of the power supply voltage to the control unit when the status signal is a high-level signal.

4. The power supply device according to claims 1 to 3, wherein the switching circuit is a photocoupler or a photo-MOS.

5. An electronic device connected to a power supply device, comprising:
a battery configured to supply power to the electronic device; and
a status detecting unit configured to be operated by power supplied from the power supply device or the battery, to detect power status of the electronic device or operating status of the electronic device, and to output a status signal indicating the power status of the electronic device or the operating status of the electronic device to the power supply device.

6. The electronic device according to claim 5, wherein the status detecting unit outputs a high-level signal as the status signal when the electronic device is power-off or when the electronic device is in a hibernation.

7. The electronic device according to claim 5 or 6, wherein the status detecting unit is operated by power supplied from the battery when the electronic device is power-off or when the electronic device is in the hibernation.

8. An electronic device system comprising:
a power supply device configured to supply power; and
an electronic device connected to the power supply device,
wherein the electronic device comprises
a battery configured to supply power to the electronic device and
a status detecting unit configured to be operated by power supplied from the power supply device or the battery, to detect power status of the electronic device or operating status of the electronic device, and to output a status signal indicating the power status of the electronic device or the operating status of the electronic device to the power supply device, and
the power supply device comprises
a control unit configured to control supply of power to the electronic device and
a switching circuit configured to receive the status signal, and to start and stop supply of a power supply voltage to the control unit based on the status signal.

9. The electronic device system according to claim 8, wherein the switching circuit sets an input voltage to the control unit used to control supply of power to the electronic device to low level based on the status signal.

10. The electronic device system according to claim 8 or 9, wherein the switching circuit stops supply of the power supply voltage to the control unit when the status signal is a high-level signal.

11. The electronic device system according to claims 8 to 10, wherein the switching circuit is a photocoupler or a photo-MOS.

12. The electronic device system according to claim 8, wherein the status detecting unit outputs a high-level signal as the status signal when the electronic device is power-off or when the electronic device is in a hibernation.

13. The electronic device system according to claim 8 or 12, wherein the status detecting unit is operated by power supplied from the battery when the electronic device is power-off or when the electronic device is in the hibernation.
